(19)

Europäisches
Patentamt
European
Patent Office
Office européen
des brevets

(11) **EP 3 246 877 A1**

(12) **EUROPEAN PATENT APPLICATION**

(43) Date of publication:
**22.11.2017 Bulletin 2017/47**

(51) Int Cl.:
***G06T 7/593*** *(2017.01)*

(21) Application number: **17168600.9**

(22) Date of filing: **28.04.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **18.05.2016 JP 2016099298**

(71) Applicant: **Ricoh Company, Ltd.
Tokyo 143-8555 (JP)**

(72) Inventor: **MOTOHASHI, Naoki
Tokyo, 143-8555 (JP)**

(74) Representative: **Schwabe - Sandmair - Marx
Patentanwälte Rechtsanwalt
Partnerschaft mbB
Joseph-Wild-Straße 20
81829 München (DE)**

(54) **ROAD SURFACE ESTIMATION BASED ON VERTICAL DISPARITY DISTRIBUTION**

(57)     An image processing device (600) and an image processing method include generating, from a distance image having a plurality of distance values according to distance from a road surface on a plurality of captured images captured by a plurality of imaging units (510a, 510b), vertical-direction distribution data indicating frequency distribution of the distance values in a vertical direction of the distance image, estimating a road surface in each segment that depends on the distance, based on the vertical-direction distribution data, calculating reliability of the road surface estimated by the estimating (S201), and correcting a road surface in a segment to be corrected based on the reliability calculated by the calculating, with reference to a road surface estimated in an adjacent segment (S202).

FIG. 1

EP 3 246 877 A1

## Description

### BACKGROUND

#### Technical Field

The present disclosure relates to an image processing device and an image processing method.

#### Background Art

In order to ensure security of cars, conventionally, the body structure or the like of cars have been developed with a view to protecting pedestrians or passengers when there is a collision with the passengers or other cars. However, in recent years, technologies to detect, for example, a person or a car at high speed have been developed due to the development of information processing technologies and image processing technologies. With the application of such technologies, cars that prevent a collision by automatically applying brakes beforehand are on sale.

In order to achieve automatic braking, it is necessary to measure the distance to an object such as a person or another car. For such purposes, measurement using the images obtained by a stereo camera have been brought into active use.

In such a measurement where the images obtained by a stereo camera are used, technologies for recognizing an object such as a person and another car with the following image processing have been proposed (see, for example, JP-2015-075800-A).

In such technologies, firstly, a V-disparity image is generated where the coordinate in the vertical direction of the multiple images captured by a stereo camera is a first axis, the disparity among these images is a second axis, and the value of frequency of the disparity is a pixel value. Subsequently, the road surface is detected from the generated V-disparity image. The noise is canceled using the detected road surface, and a U-disparity image is generated where the coordinate of the image in the horizontal direction is the horizontal axis, the disparity of the image is the vertical axis, and the dissimilarity frequency is the pixel value. Then, an object such as a person or another car is recognized based on the generated U-disparity image.

However, in the related art example, when the disparities of the road surface cannot precisely be detected, for example, due to a break in a white line or reflection from the road surface in a rainy weather, the road surface cannot be measured with precision.

### SUMMARY

Embodiments of the present disclosure described herein provide an image processing device and an image processing method that include generating, from a distance image having a plurality of distance values according to distance from a road surface on a plurality of captured images captured by a plurality of imaging units, vertical-direction distribution data indicating frequency distribution of the distance values in a vertical direction of the distance image, estimating a road surface in each segment that depends on the distance, based on the vertical-direction distribution data, calculating reliability of the road surface estimated by the estimating, and correcting a road surface in a segment to be corrected based on the reliability calculated by the calculating, with reference to a road surface estimated in an adjacent segment.

With the technologies according to the embodiments of the present disclosure, the accuracy of the road surface detection can be improved.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is a schematic diagram illustrating a configuration of a vehicle-borne-equipment control system, according to an embodiment of the present disclosure.

FIG. 2 is a schematic diagram illustrating a configuration of a capturing unit and an image analysis unit, according to an embodiment of the present disclosure.

FIG. 3 is a functional block diagram of a mobile equipment control system according to an embodiment of the present disclosure.

FIG. 4A and FIG. 4B are diagrams illustrating disparity image data and a V-map generated from the disparity image data, according to an embodiment of the present disclosure.

FIG. 5A is a diagram illustrating an example image captured by an imaging unit on one side, which serve as a reference image, according to an embodiment of the present disclosure.

FIG. 5B is a diagram illustrating a V-map corresponding to the captured image illustrated in FIG. 5A.

FIG. 6A is a diagram illustrating an example image captured by an imaging unit on one side, which serve as a reference image, according to an embodiment of the present disclosure.

FIG. 6B is a diagram illustrating a V-map of a predetermined area corresponding to the captured image illustrated in FIG. 6A.

FIG. 7A is a diagram illustrating an example image captured by an imaging unit on one side, which serve as a reference image, where noise occurs, according to an embodiment of the present disclosure.

FIG. 7B is a diagram illustrating a V-map corresponding to the captured image illustrated in FIG. 7A.

FIG. 8 is a flowchart of road estimation processes according to an embodiment of the present disclosure.

FIG. 9 is a flowchart of road surface correcting processes according to an embodiment of the present disclosure.

FIG. 10A, FIG. 10B, and FIG. 10C are diagrams illustrating a method of determining whether or not an estimated road surface is inappropriate, according to an embodiment of the present disclosure.

FIG. 11A and FIG. 11B are diagrams illustrating processes of correcting the road surface in a segment that is determined to be inappropriate, according to an embodiment of the present disclosure.

FIG. 12 is a diagram illustrating road correcting processes according to an embodiment of the present disclosure.

FIG. 13 is a diagram illustrating road surface correcting processes according to a second embodiment of the present disclosure.

FIG. 14 is a flowchart of road surface correcting processes according to a third embodiment of the present disclosure.

FIG. 15A and FIG. 15B are diagrams illustrating road surface correcting processes according to a third embodiment of the present disclosure.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more central processing units (CPUs), digital signal processors (DSPs), application-specific-integrated-circuits (ASICs), field programmable gate arrays (FPGAs), computers or the like. These terms in general may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Hereinafter, a mobile equipment control system that is provided with an image processing device, according to an embodiment of the present disclosure, is described.

[First Embodiment]

<System Configuration of Vehicle-borne-equipment Control System>

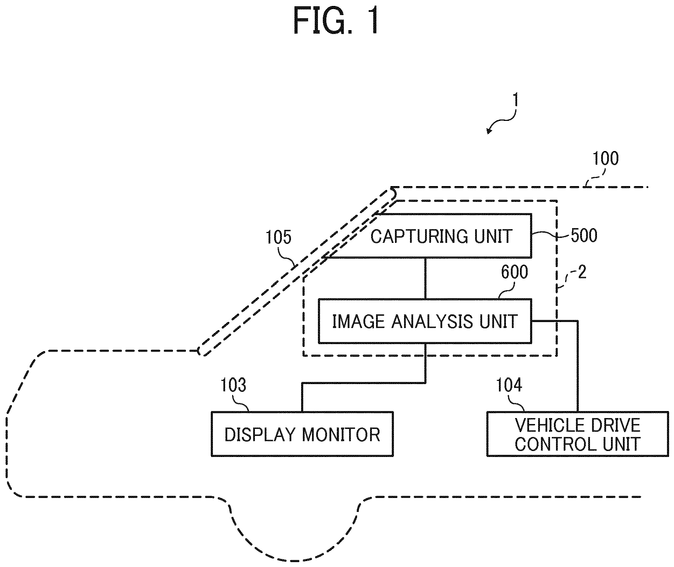

FIG. 1 is a diagram illustrating a vehicle-borne-equipment control system 1 that serves as a mobile equipment control system according to the present embodiment.

The vehicle-borne-equipment control system 1 is provided for a vehicle 100 that is a mobile object such as a car, and includes a capturing unit 500, an image analysis unit 600, a display monitor 103, and a vehicle drive control unit 104. Firstly, the capturing unit 500 detects relative heights of a road surface (moving surface) ahead of the user's vehicle from the captured-image data of an area ahead of the user's vehicle (mobile object) in the direction of travel (captured area). Note that the relative heights herein indicate a relative inclination state. Secondly, the capturing unit 500 detects the three-dimensional shape of the road surface on which the vehicle is traveling ahead of the user's vehicle, from the detected results, and controls the mobile object or various kinds of vehicle-borne equipment using the detection results. The controls for the mobile object include, for example, informing the user of an alert, controlling the steering wheel of the user's vehicle 100 (i.e., the user's mobile object), or applying brakes to the user's vehicle 100 (i.e., the user's mobile object).

The capturing unit 500 is disposed, for example, near the rear-view mirror provided for a front windshield 105 of the user's vehicle 100. Various kinds of data such as the captured-image data captured by the capturing unit 500 is input to the image analysis unit 600 that serves as an image processing unit.

The image analysis unit 600 analyzes the data sent from the capturing unit 500 to detect the relative heights (position information) of some points on the road surface on which the vehicle is traveling ahead of the user's vehicle with reference to the road surface on which the user's vehicle 100 is traveling, which is a portion of the road surface directly below the user's vehicle 100. Accordingly, the image analysis unit 600 can grasp a three-dimensional shape of the road surface ahead of the user's vehicle. Moreover, the image analysis unit 600 recognizes a target object such as another vehicle ahead of the user's vehicle, a pedestrian, and various kinds of obstacles.

The analytical results that are obtained by the image analysis unit 600 are sent to the display monitor 103 and the vehicle drive control unit 104. The display monitor 103 displays the captured-image data and the analytical results that are obtained by the capturing unit 500. The vehicle drive control unit 104 performs controls for driver assistance including, for example, informing the driver of the user's vehicle 100 of an alert or controlling the steering wheel or brake of the vehicle, based on the recognition results of a target object such as another vehicle ahead of the user's vehicle, a pedestrian, and various kinds of obstacles, by the image analysis unit 600.

<Configuration of Capturing Unit 500 and Image Analysis Unit 600>

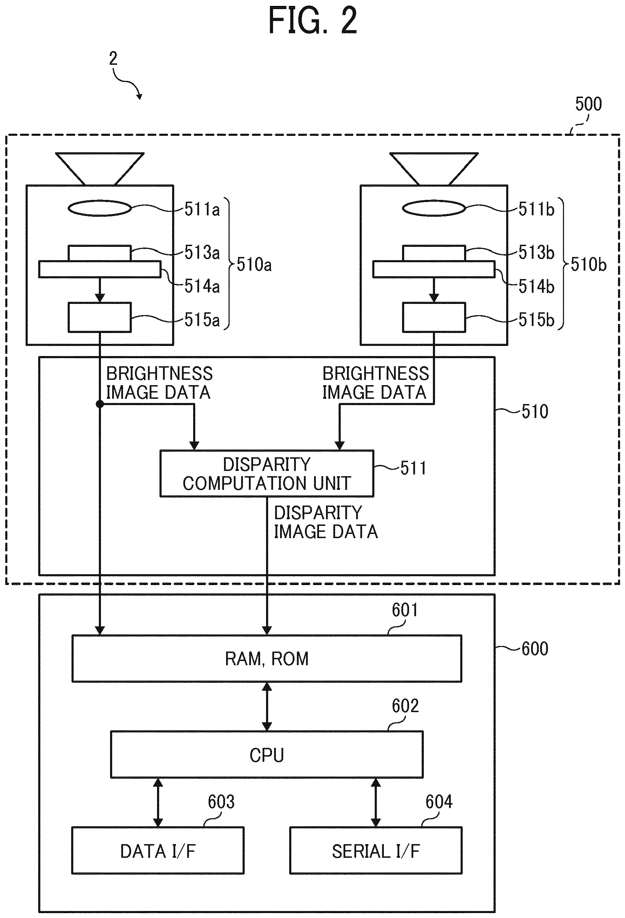

FIG. 2 is a diagram illustrating a configuration of the capturing unit 500 and the image analysis unit 600, according to the present embodiment.

The capturing unit 500 is configured by a stereo camera for which two imaging units 510a and 510b are provided, and these two imaging units 510a and 510b are identical with each other. The imaging units 510a and 510b are provided with imaging lenses 511a and 511b, sensor substrates 514a and 514b including image sensors 513a and 513b where photoreceptors are two-dimensionally arranged, and signal processors 515a and 515b that convert the analog electrical signals output from the sensor substrates 514a and 514b into digital electrical signal to generate and output the captured-image data, respectively. Note that the analog electrical signals refer to the electrical signals that correspond to the amount of light received by the photoreceptors of the image sensors 513a and 513b. The capturing unit 500 outputs brightness image data and disparity image data.

Moreover, the capturing unit 500 includes processing hardware 510 composed of, for example, a field programmable gate array (FPGA). In order to obtain a disparity image from the brightness image data output from the imaging units 510a and 510b, the processing hardware 510 is provided with a disparity computation unit 511 that calculates a disparity value of corresponding portions of the images that are captured by the imaging units 510a and 510b, respectively. Note also that the disparity computation unit 511 serves as a disparity image data generation unit.

The disparity value described herein is defined as follows. Assuming that one of the two images captured by the imaging units 510a and 510b, respectively, is a reference image and the other one is a comparison image, the amount of misalignment between a portion of the reference image and a portion of the comparison image that correspond to the same point of the captured area is calculated and obtained as the disparity value of that portion of the captured image. By applying the principles of triangulation, the distance to the same point of the captured area, which corresponds to the portions of the reference image and the comparison image, can be calculated and obtained from the disparity value calculated as above.

The image analysis unit 600 is configured, for example, by an image processing substrate, and includes a memory 601 composed of, for example, a random access memory (RAM) and a read-only memory (ROM) that store the brightness image data and the disparity image data output from the capturing unit 500, a central processing unit (CPU) 602 that executes a computer program for recognizing an object to be recognized or controlling the calculation of disparities, a data interface (I/F) 603, and serial interface (I/F) 604.

The FPGA that configures the processing hardware 510 performs, for example, processing that needs to be done in real time on the image data. For example, the FPGA performs processing such as gamma correction, distortion correction (collimation of the captured images on the right and left), parallax computation using block matching, to generate the data of a disparity image, and writes the data of generated disparity image onto the RAM of the image analysis unit 600. The CPU 602 of the image analysis unit 600 is responsible for controlling image sensor controllers of the imaging units 510a and 510b and controlling an entirety of the image processing substrate. Moreover, the CPU 602 of the image analysis unit 600 loads a program for, for example, detecting the three-dimensional shape of a road surface and detecting various kinds of object (object to be recognized) such as a guardrail from the ROM, and performs various kinds of processes using the brightness image data or disparity image data accumulated in the RAM as an input. Then, the CPU 602 of the image analysis unit 600 outputs the results of processes to an external device through the data interface 603 or the serial interface 604. In so performing these processes as described above, the vehicle speed of the user's vehicle 100, the acceleration (i.e., mostly the acceleration caused in the forward and backward directions of the user's vehicle), and vehicle movement information such as a steering angle and a yaw rate may be input using the data interface 603, and the input data may be used as a parameter for various kinds of processing. The data that is output to an external device is used as input data for controlling various kinds of equipment of the user's vehicle 100, and for example, brake control, vehicle speed control, alert control are performed accordingly.

Note also that the capturing unit 500 and the image analysis unit 600 may be configured as the imaging device 2 that is an integrated single device.

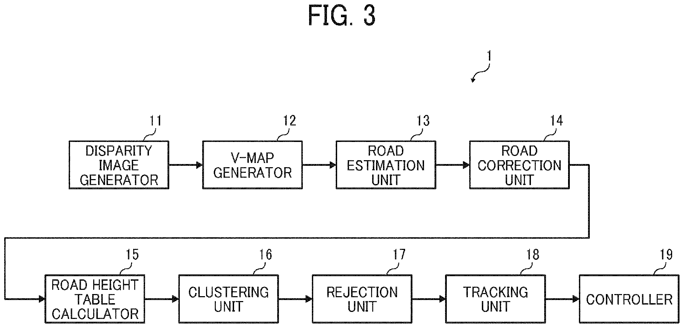

FIG. 3 is a functional block diagram of a vehicle-borne-equipment control system 1 that is implemented by the processing hardware 510 and the image analysis unit 600, which are illustrated in FIG. 2, and the vehicle drive control unit 104, according to the present embodiment. Note also that the functional units of the image analysis unit 600 are implemented by executing one or more programs installed in the image analysis unit 600 on the CPU 602 of the image analysis unit 600.

Hereinafter, the processes according to the present embodiment are described.

<Disparity Image Generating Processes>

A disparity image generator 11 performs disparity image generating processes to generate disparity image data. Note that the disparity image generator 11 may be implemented, for example, by the disparity computation unit 511 (see FIG. 2).

In the disparity image generating processes, firstly, the brightness image data of the imaging unit 510a on one side and the brightness image data of the imaging unit 510b on the other side are used as reference image data and comparison image data, respectively, and a disparity between the reference image data and the comparison image data is computed to generate and output disparity image data. The disparity image data indicates a disparity image where the pixel values that correspond to the disparity values d calculated for portions of the image in the reference image data are represented as the pixel values of the respective portions of the image.

More specifically, the disparity image generator 11 defines a block that is composed of a plurality of pixels (for example, sixteen pixels × one pixel) around a single target pixel in a certain row of the reference image data. In parallel with that, in the same row in the comparison image data, a block of the same size as the block defined in the reference image data is shifted in a lateral-line direction (i.e., X-direction) on a pixel-by-pixel basis, and a correlation value that indicates the correlation between the characteristics of the pixel values of the block defined in the reference image data and the characteristics of the pixel values of each block of the comparison image data is each calculated. Then, based on the calculated correlation values, matching processes are performed to select one of the blocks in the comparison image data that has the highest correlation with the block of the reference image data. Subsequently, the amounts of misalignment between the target pixel in the block of the reference image data and the corresponding pixels in the block of the comparison image data selected in the matching processes are calculated as the disparity values d. Such processes of calculating the disparity values d are performed for the entirety of the reference image data or a specific area of the reference image data to obtain the disparity image data.

As the characteristics of the block that are used for the matching processes, for example, the pixel values (values of brightness) of the pixels in the block may be used. As a correlation value, for example, a sum total of the absolute values of the differences between the pixel values (values of brightness) of the pixels in the block of the reference image data and the pixel values (values of brightness) of the pixels in the block of the comparison image data that correspond to those in the block of the reference image data, respectively, may be used. In such cases, the block where the sum total becomes the smallest is considered to have the highest correlation.

In order to implement the matching processes by the disparity image generator 11 by processes at hardware, a method such as sum of squared difference (SSD), zero-mean sum of squared difference (ZSSD), sum of absolute difference (SAD), Z zero-mean sum of absolute difference (ZSAD), and normalized cross-correlation (NCC) may be used. Note also that the matching processes can only yield a disparity value on a pixel-by-pixel basis. For this reason, when a disparity value of a sub-pixel level for less than one pixel is required, an estimated value has to be used. As an estimation method, for example, an equiangular straight-line method and a quadratic curve method.

<V-map Generating Processes>

The V-map generator 12 generates a V-disparity map (V-map) based on disparity pixel data. Note that the V-map is an example of vertical-direction distribution data, and the disparity pixel data that is included in the disparity image data is represented by a group of values (x, y, d) indicating the position in the X-direction, the position in the Y-direction, and the disparity value d, respectively. This group of values may be converted into three-dimensional coordinate data (d, y, f) where the X-axis, the Y-axis, and the Z-axis denote d, y, and a frequency f, respectively, and such a three-dimensional coordinate data (d, y, f) may be used as disparity histogram data. Alternatively, such a three-dimensional coordinate data (d, y, f) may be limited to the values that exceed a predetermined frequency threshold, and such a limited three-dimensional coordinate data (d, y, f) may be used as disparity histogram data. The disparity histogram data according to the present embodiment consists of three-dimensional coordinate data (d, y, f), and the V-map is equivalent to the X-Y two-dimensional coordinate system onto which the three-dimensional histogram data is distributed.

More specifically, the V-map generator 12 calculates a disparity value frequency distribution for a plurality of row areas that are obtained by dividing a disparity image into a plurality of segments in the up-and-down directions. The above-mentioned disparity histogram data indicates the disparity value frequency distribution.

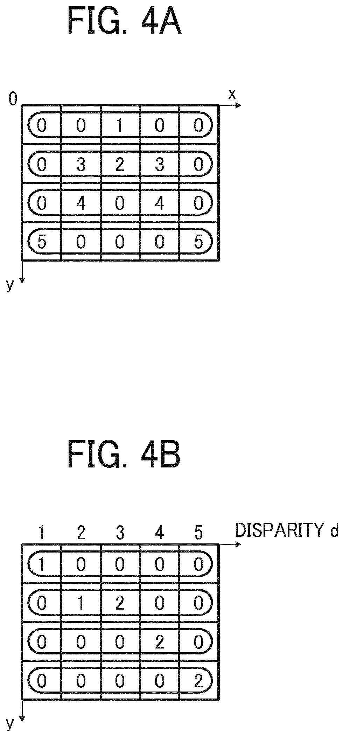

FIG. 4A and FIG. 4B are diagrams illustrating disparity image data and a V-map generated from the disparity image data, according to the present embodiment. More specifically, FIG. 4A is a diagram illustrating the distribution of disparity values of a disparity image, and FIG. 4B is a diagram illustrating a V-map that indicates the distribution of frequency of disparity values on a row-by-row basis in the disparity image illustrated in FIG. 4A.

When the disparity image data with the distribution of disparity values as depicted in FIG. 4A is input, the V-map generator 12 calculates a disparity value frequency distribution, which indicates the distribution of the number of disparity values for each of the rows, and outputs the calculated disparity value frequency distribution as the disparity histogram data. A V-map as illustrated in FIG. 4B can be obtained by expressing the data of the disparity value frequency distribution of each row, as obtained above, in a two-dimensional rectangular coordinate system where the Y-axis indicates the positions on the disparity image in the Y-direction and the X-axis indicates the disparity values d. Note that the positions on the disparity image in the Y-direction indicate the positions on a captured image in the up-and-down directions. The V-map may be expressed as an image where the pixels with pixel values that correspond to frequencies f are distributed on the two-dimensional rectangular coordinate system.

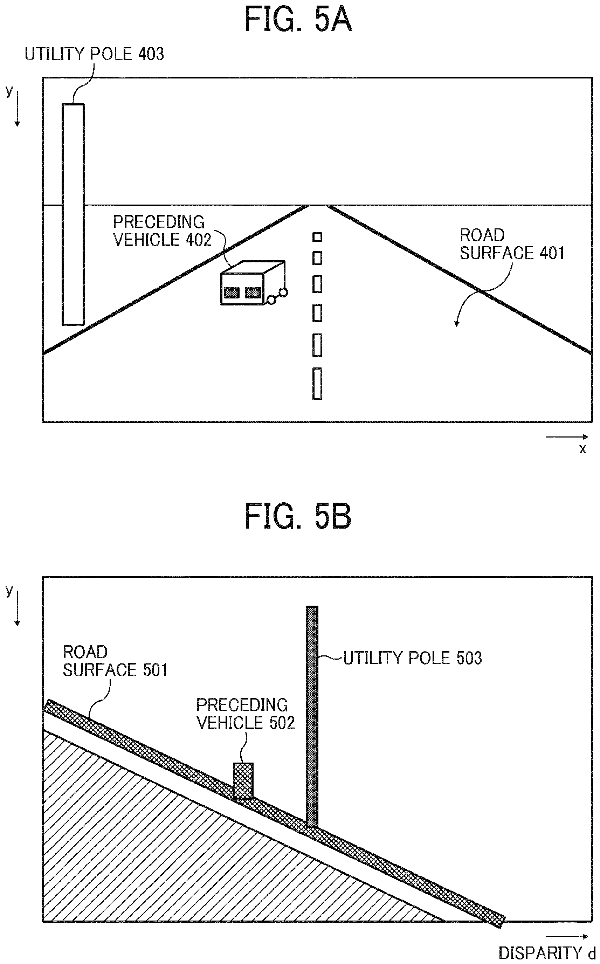

FIG. 5A is a diagram illustrating an example image captured by an imaging unit on one side, which serve as a reference image, according to the present embodiment.

FIG. 5B is a diagram illustrating a V-map that corresponds to the captured image illustrated in FIG. 5A.

In other words, a V-map as illustrated in FIG. 5B is generated from a captured image as illustrated in FIG. 5A. Note also that in a V-map, no disparity is detected in the region under the road surface. Thus, no disparity is counted in an area that is shaded by oblique lines.

In the example image illustrated in FIG. 5A, a road 401 on which the user's vehicle is traveling, a preceding vehicle 402 that exists ahead of the user's vehicle, and a utility pole 403 that exists out of the road are project are captured. In the V-map illustrated in FIG. 5B, a road 501, a preceding vehicle 502, and a utility pole 503 exist in relation to the example image illustrated in FIG. 5A.

It is assumed that in the above example image, the road surface ahead of the user's vehicle is a relatively flat road surface. In other words, it is assumed that in the above example image, the road surface ahead of the user's vehicle is equivalent to a virtual reference road surface (virtual reference moving surface) that is obtained by extending a plane parallel with the road surface directly below the user's vehicle towards the area in front of the user's vehicle. In such cases, on a lower side of the V-map that corresponds to the lower part of the image, high-frequency points are distributed approximately in an inclined straight line where the disparity value d decreases towards the upper side of the image. The pixels with such a distribution exist approximately at the same distance in each row of the disparity image, and indicate an object to be recognized that has the highest occupancy and whose distance gets further continuously towards the upper side of the image.

The imaging unit 510a captures an area ahead of the user's vehicle. Accordingly, as illustrated in FIG. 5A, the disparity value d on the road surface of the captured image becomes smaller towards the upper side of the image. Note also that the pixels that indicate the road surface in the same row (horizontal line) have about the same disparity value d. Accordingly, the high-frequency points that are distributed on the V-map approximately in a straight line as described above match the characteristics of the pixels that indicate a road surface (moving surface). Accordingly, the pixels on an approximate straight line on which high-frequency points on the V-map are distributed or the pixels that are distributed around the approximate straight line can be estimated as the pixels that indicate a road surface, with a high degree of precision. Moreover, the distance to the road-surface portion that is displayed in pixels can be calculated from the disparity value d of a corresponding point on the approximate straight line, with a high degree of precision.

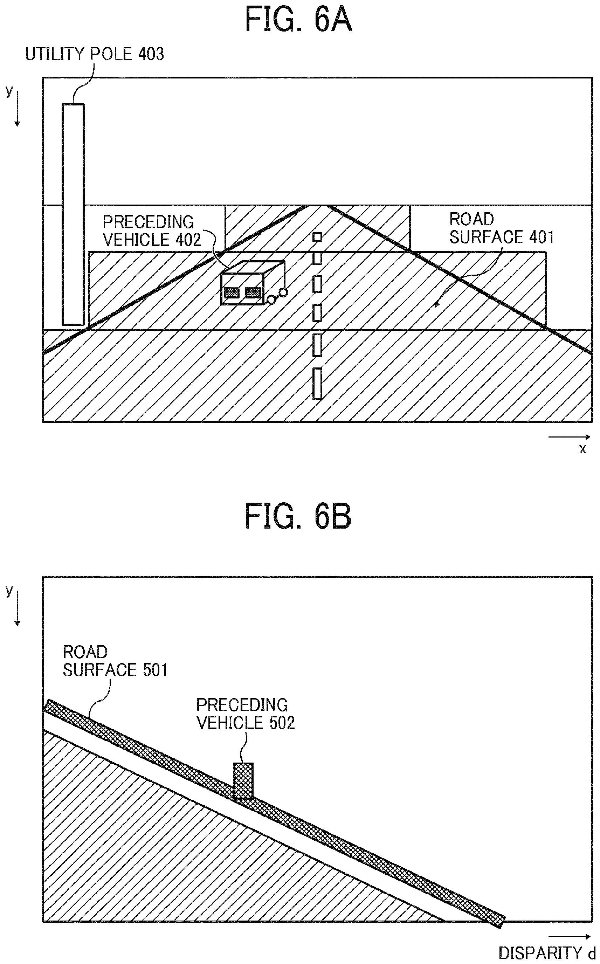

FIG. 6A is a diagram illustrating an example image captured by an imaging unit on one side, which serve as a reference image, according to the present embodiment.

FIG. 6B is a diagram illustrating a V-map of a certain area of the captured image illustrated in FIG. 6A.

The V-map generator 12 may generate a V-map using all the pixels in the disparity image, or may generate a V-map only using the pixels of a certain area (for example, the area that could include a road surface) on a disparity image (FIG. 6A illustrates an example captured image from which a disparity image is derived). For example, as the distance is longer, the road surface gets narrow towards the vanishing point. For this reason, as illustrated in FIG. 6A, areas that depend on the width of a road surface may be set. Due to this configuration, a noise due to an object (for example, the utility pole 403) that exists in an area other than the area that could include a road surface can be excluded from the V-map.

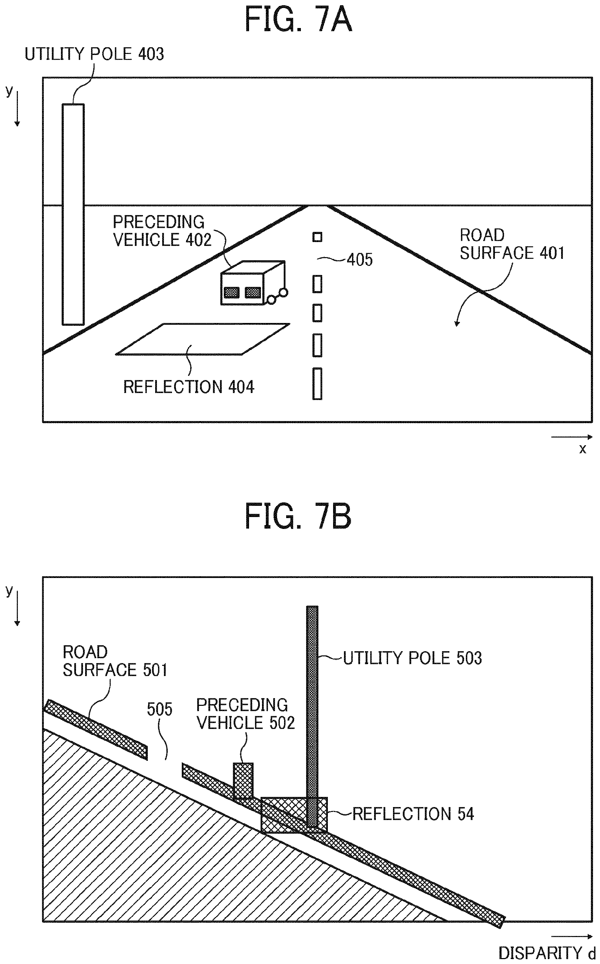

FIG. 7A is a diagram illustrating an example image captured by an imaging unit on one side, which serve as a reference image, where noise occurs, according to the present embodiment.

FIG. 7B is a diagram illustrating a V-map corresponding to the captured image illustrated in FIG. 7A.

When compared with the example image illustrated in FIG. 6A, in the example images illustrated in FIG. 7A and FIG. 7B, a reflection 404 due to a puddle or the like and a break 405 in a white line are captured in FIG. 7A. Note that such a break in a white line occurs, for example, when the white line is erased due to aging on the road or when the spaces between white lines are wide.

The V-map illustrated in FIG. 7B includes a reflection 504 due to a puddle or the like and a noise due to a break 505 in a white line. As illustrated in FIG. 7B, the pixels (disparity points) that have a value of frequency equal to or greater than a predetermined value (for example, 1) due to the reflection 504 caused by a puddle or the like are distributed in the horizontal-axis direction (in the direction of the disparity value).

<Road Estimation>

A road estimation unit 13 estimates (detects) the road surface based on the disparity image generated by the disparity image generator 11. Hereinafter, the processes of the road estimation unit 13 are described.

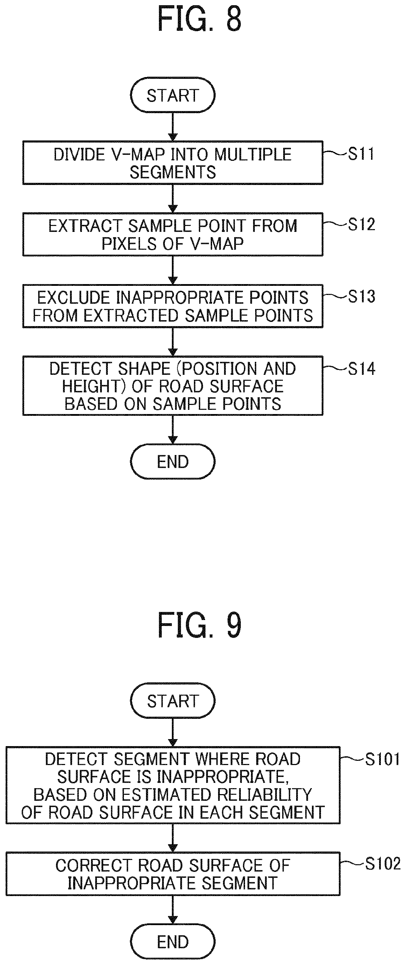

FIG. 8 is a flowchart of road estimation processes according to the present embodiment.

The road estimation unit 13 divides a V-map into a plurality of segments according to the value of disparity d that is the horizontal axis of the V-map (step S11). By dividing the V-map into a plurality of segments, for example, a road surface with complicated shapes, such as a hill where a flat road changes to an uphill or a downhill at some midpoint, can be figured out.

Subsequently, the road estimation unit 13 extracts a sample point from the pixels of the V-map (step S12). For example, the road estimation unit 13 may extract one sample point or two or more sample points from the coordinates of each disparity value d. Alternatively, the road estimation unit 13 may extract the most frequent points from the coordinates of each disparity value d, as a sample point. Alternatively, the road estimation unit 13 may extract the most frequent points in a plurality of d coordinates including the disparity values d (for example, the coordinates of the disparity values d and one or more coordinates of at least one of the right and left of the disparity values d) as a sample point.

Subsequently, the road estimation unit 13 excludes inappropriate points (miss points) from the extracted sample points (step S13). The road estimation unit 13 calculates and obtains an approximate straight line that corresponds to the extracted sample points, using, for example, a least-squares method. Then, the sample point whose Euclidean distance from the calculated approximate straight line is equal to or longer than a prescribed threshold are excluded. Note that these excluding processes may be omitted.

Subsequently, the road estimation unit 13 detects the shape (position and height) of the road surface based on the sample points that are not excluded in the step S13 (step S14). The road estimation unit 13 calculates and obtains an approximate straight line from the sample points of each segment, using, for example, a least-squares method, and the calculated approximate straight line is detected (estimated) as the road surface. Alternatively, the road estimation unit 13 may use, for example, an approximate polynomial to calculate and obtain a curve from sample points of segments. Such a curve can be used as a detected (estimated) road surface.

<Correction of Road Surface>

The road correction unit 14 corrects the road surface in each segment estimated by the road estimation unit 13. Hereinafter, the processes of the road correction unit 14 are described.

FIG. 9 is a flowchart of road surface correcting processes according to the present embodiment.

The road correction unit 14 detects a segment where the road surface is inappropriate, based on the reliability of road surface in each segment estimated by the road estimation unit 13 (step S101).

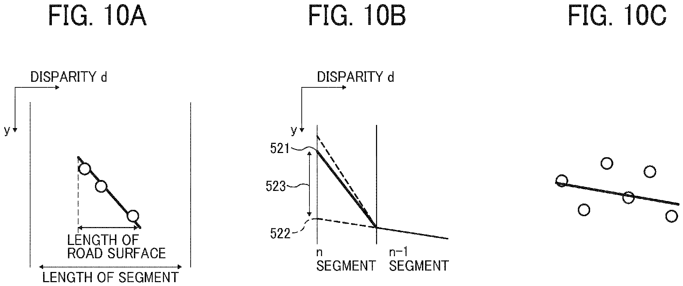

FIG. 10A, FIG. 10B, and FIG. 10C are diagrams illustrating a method of calculating a reliability level of an estimated road surface, according to the present embodiment.

FIG. 10A is a diagram illustrating an example case where the number of sample points extracted by the road estimation unit 13 in the step S12 is small, according to the present embodiment. In such a case as illustrated in FIG. 10A, for example, when the number of sample points in a segment to be processed is equal to or less than a predetermined value, the road correction unit 14 determines that the reliability level is low and the estimated road surface is inappropriate. Alternatively, the road correction unit 14 may determine that the estimated road surface is inappropriate when a ratio of the length of road surface estimated in a segment to be processed and the length of segment to be processed is equal to or less than a prescribed threshold.

FIG. 10B is a diagram illustrating an example case where the inclination of an estimated road surface is inappropriate, according to the present embodiment. In such a case as illustrated in FIG. 10B, for example, the road correction unit 14 may calculate the height (intercept) 522 of the road surface at the endpoint (left end) of the segment to be processed that is obtained by extending the road surface in a segment before the segment to be processed. Then, when a difference 523 between the calculated height 522 and the height (intercept) 521 of the road surface at the ending point (left end) of the segment to be processed is equal to or greater than a prescribed threshold, the road correction unit 14 determines that the reliability is low and the estimated road surface is inappropriate.

FIG. 10C is a diagram illustrating an example case where the correlation of sample points on an estimated road surface is weak, according to the present embodiment. In such a case as illustrated in FIG. 10C, for example, when the value of correlation calculated using a least-squares method is equal to or less than a predetermined value, the road correction unit 14 determines that the reliability level is low and the estimated road surface is inappropriate.

Subsequently, the road correction unit 14 corrects the road surface of the segment that is estimated to be inappropriate by the road estimation unit 13 (step S102).

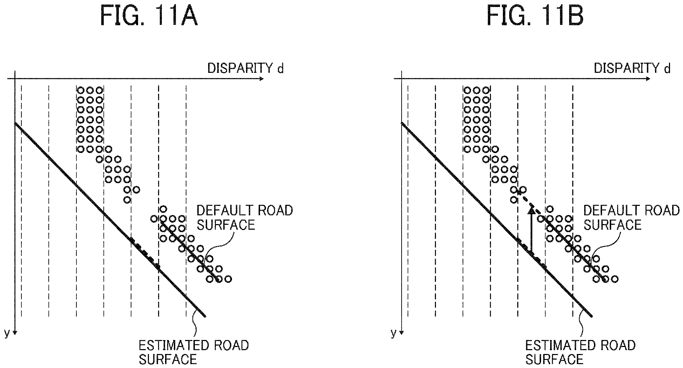

FIG. 11A and FIG. 11B are diagrams illustrating processes of correcting the road surface in a segment that is determined to be inappropriate, according to the present embodiment.

When the road surface is relatively flat, correction may be performed using a road surface to be used for correction such as a predetermined flat road surface (default road surface) and a road surface (historic road surface) of the segment that is detected in the frames of previously captured images.

However, for example, if the road surface has a height difference compared with a flat road and the estimated road surface in a segment that is determined to be inappropriate is replaced with a road surface to be used for correction such as a default road surface or a historic road surface, as illustrated in FIG. 11A, the road surface ends up being replaced with a road surface whose height is lower than actually the road surface is.

In order to avoid such a situation, as illustrated in FIG. 11B, when a road surface estimated in a segment to be corrected (hereinafter, such a segment to be corrected may be referred to as a second segment) is inappropriate, the road correction unit 14 perform correction using a road surface of a segment that is closer than the segment (hereinafter, such a segment may be referred to as a first segment) and where the estimated road surface has been determined to be appropriate.

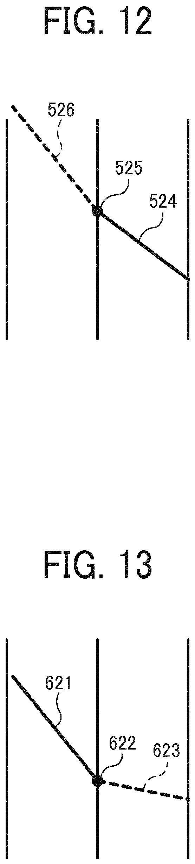

FIG. 12 is a diagram illustrating road correcting processes according to the present embodiment.

As illustrated in FIG. 12, the road correction unit 14 adjusts, for example, the height of the starting point (right end) of a road surface to be corrected 526 so as to pass through the endpoint (left end) 525 of the road surface 524 in the segment to be corrected, while maintaining the inclination of the road surface to be corrected 526.

According to the actual measurement performed as in the embodiments described above, the height of a road surface that has a height difference compared with a flat road can precisely be estimated due to the processes as described above.

<Calculation of Road Height Table>

A road height table calculator 15 performs road height table calculation where the road height is calculated and tabulated based on the road surface in each segment corrected by a smoothing processor 135. Note that the road height herein indicates the height relative to the road surface underneath the user's vehicle.

A road height table calculator 15 calculates, from the road-surface information in segments, the distance to each one of the road surfaces that are displayed on row areas (areas in the up-and-down directions) of a captured image. Note that in which one of the row areas of the captured image each road-surface portion in the direction of travel of the user's vehicle on an assumed plane, which is obtained by extending a portion of the road surface directly below the user's vehicle so as to be parallel to the road surface in the direction of travel ahead of the user's vehicle, is to be displayed is determined in advance, and the assumed plane (i.e., the reference road surface) is indicated by a straight line (i.e., a reference straight line) on the V-map. The road height table calculator 15 compares a road surface in each segment with a reference straight line to obtain the height of each road-surface portion ahead of the user's vehicle. A simplified version is as follows. The heights of road-surface portions existing ahead of the user's vehicle within the distance obtained from the associated disparity value are calculated from the positions in the Y-axis of each segment. The road height table calculator 15 tabulates the heights of the road-surface portions obtained from an approximate straight line, in a desired disparity area.

Assuming that the position in the Y-axis on a road surface with the disparity value d is y0, the height of an object, with reference to the road surface, displayed on a portion of the captured image corresponding to the point where the position in the Y-axis is y' with the disparity value d can be calculated by (y'-y0). As known in the art, the height H of an object at coordinates (d, y') of a V-map with reference to a road surface can be calculated by the formula given below. Note that in the following equation, "z" denotes the distance (z=BF/(d-offset)) that is calculated from the disparity value d, and "f" denotes a value indicating the focal length of a camera where the measurement unit is converted into that of (y'-y0). Moreover,

"BF" denotes a value obtained by multiplying the baseline length of a stereo camera with the focal length, and "offset" denotes a disparity value when an object at infinity is captured.

$$H = z \times (y' = y0)/f$$

<Clustering, Rejection, Tracking>

Assuming that the disparity pixel data that is included in the disparity image data is represented by a group of values (x, y, d) indicating the position in the X-direction, the position in the Y-direction, and the disparity value d, respectively, a clustering unit 16 sets x, d, and frequency in the X-axis, the Y-axis, and the Z-axis, respectively, to generate X-Y two-dimensional histogram data (frequency U-map).

The clustering unit 16 a frequency U-map is generated only for points (x, y, d) of the disparity image where the height H from the road surface is within a predetermined range (for example, 20 centimeters (cm) to 3 meters (m)) based on the heights of the road-surface portions tabulated by the road height table calculator 15. In such cases, an object that exists in a range of the predetermined height can appropriately be extracted from the road surface.

The clustering unit 16 detects an area where frequency is higher than a prescribed value and disparities densely exist as an area of objects, and gives individual information such as the type of an object (for example, person or pedestrian) predicted from the coordinates on the disparity image or the actual size of the object.

The rejection unit 17 rejects the data of an object that is not an object to recognize, based on a disparity image, a frequency U-map, and individual information of the object.

A tracking unit 18 determines whether or not an object is to be tracked when the detected object appears in succession in the frames of a plurality of disparity images.

<Controls for Driver Assistance>

The controller 19 performs controls for driver assistance including, for example, informing the driver of the user's vehicle 100 of an alert or controlling the steering wheel or brake of the vehicle, based on the detection results of objects performed by the clustering unit 16.

[Second Embodiment] In the first embodiment, example cases are described in which the road correction unit 14 corrects a road surface in the second segment based on a road surface in a segment closer to the user's vehicle rather than the segment of an object to be corrected.

In the second embodiment, by contrast, example cases are described in which the road correction unit 14 corrects a road surface in the segment of an object to be corrected based on a road surface in a segment further from the user's vehicle rather than the segment of the object to be corrected. Note that such a segment further from the user's vehicle rather than the segment of the object to be corrected may be referred to as a third segment in the following description. Note also that except for some points, the second embodiment is similar to the first embodiment in its configuration. For this reason, the description of the overlapping configuration is omitted where appropriate.

Hereinafter, the processes of the vehicle-borne-equipment control system 1 according to the second embodiment are described in detail. In particular, the differences from the first embodiment are described.

<Correction of Road Surface>

In the step S102 illustrated in FIG. 9, the road correction unit 14 according to the second embodiment corrects the road surface in a segment that is determined to be inappropriate as follows.

FIG. 13 is a diagram illustrating road surface correcting processes according to the second embodiment.

For example, when a road surface estimated in a segment to be processed is appropriate, the road correction unit 14 according to the second embodiment determines whether the road surface estimated in the second segment, which is a neighboring segment closer to the user's vehicle than the third segment to be processed, has been determined to be inappropriate in the step S101. When it has been determined to be inappropriate, the road correction unit 14 according to the second embodiment corrects the second segment using the road surface in the third segment.

The road correction unit 14 according to the second embodiment adjusts the height of the endpoint (left end) of a road surface to be corrected 623. In such a case, as illustrated in FIG. 13, the height of the endpoint (left end) of the road surface to be corrected 623 may be adjusted such that the endpoint (left end) of the road surface to be corrected 623 passes through a starting point (right end) 622 of the road surface 621 in the third segment, while maintaining the inclination of the road surface to be corrected 623. Alternatively, in this configuration, the height of the endpoint (left end) of the road surface to be corrected 623 may be adjusted without maintaining the inclination of the road surface to be corrected 623.

Alternatively, when the road surface in the second segment has already been corrected, for example, by the processes as described above with reference to the first embodiment, the starting point and the endpoint of the road surface in the second segment may be corrected again such that they will become the endpoint of the road surface in the first segment and the starting point of the road surface 621 in the third segment, respectively. In such a case, the road surface in the second segment may be corrected so as to be, for example, a straight line passing through the endpoint of the road surface in the first segment and the starting point of the road surface 621 in the third segment.

[Third Embodiment]

In the first embodiment and the second embodiment, cases are described in which when an estimated road surface is determined to be inappropriate based on a predetermined condition, the road surface that has been determined to be inappropriate is corrected based on a road surface that is determined to be appropriate.

In the third embodiment, example cases are described in which road surfaces that are estimated in segments are corrected based on reliability values that indicate how appropriate the road surfaces estimated in a plurality of neighboring segments are.

Note also that except for some points, the third embodiment is similar to the first embodiment in its configuration. For this reason, the description of the overlapping configuration is omitted where appropriate.

Hereinafter, the processes of the vehicle-borne-equipment control system 1 according to the third embodiment are described in detail. In particular, the differences from the first embodiment are described.

<Correction of Road Surface>

Instead of the road surface correcting processes according to the first embodiment as illustrated in FIG. 9, the road correction unit 14 according to the third embodiment corrects the road surface in a segment that is determined to be inappropriate as follows.

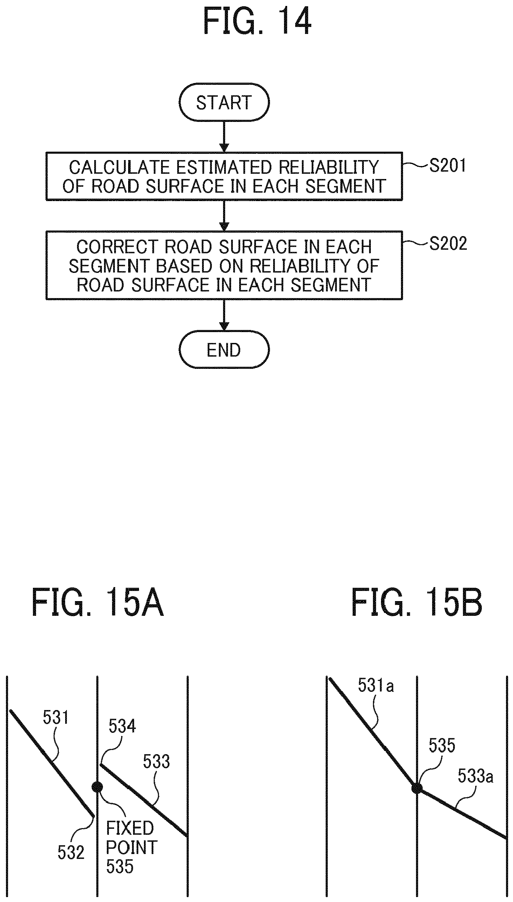

FIG. 14 is a flowchart of road surface correcting processes according to the third embodiment.

The road correction unit 14 calculates the reliability of road surface in each segment estimated by the road estimation unit 13 (step S201).

For example, the reliability of road surface is calculated as follows. Alternatively, the values (scores) that are calculated as follows may be each multiplied by a predetermined weighting coefficient and then summed up to be used as reliability values.

As illustrated in FIG. 10A, the value of a reliability level is calculated and obtained based on the number of sample points. In such cases, the road correction unit 14 performs the above calculation such that the value of the reliability level becomes higher as the number of sample points is greater. For example, the number of sample points in itself may be used as a value of reliability level. Alternatively, the road correction unit 14 may perform the above calculation such that the value of the reliability level increases as a ratio of the length of road surface estimated in a segment to be processed and the length of segment to be processed is higher. For example, the ratio in itself may be used as a value of reliability level.

As illustrated in FIG. 10B, the value of a reliability level may be calculated and obtained based on the inclination of the estimated road surface. In this case, the road correction unit 14 may perform the above calculation such that, for example, the value of the reliability level decreases as the difference 523 between the height 522 obtained by extending a road surface in a segment before the endpoint (left end) of the segment to be processed and the estimated height (intercept) 521 is greater.

As illustrated in FIG. 10C, the road correction unit 14 calculates and obtains the value of a reliability level based on, for example, the value of correlation calculated using a least-squares method. In such cases, the road correction unit 14 performs the above calculation such that the value of the reliability level becomes higher as the correlation is higher.

Subsequently, the road correction unit 14 corrects the road surface in each segment based on the reliability of the road surface in each segment (step S202).

FIG. 15A and FIG. 15B are diagrams illustrating road surface correcting processes according to the third embodiment.

the road correction unit 14 according to the third embodiment corrects the height of a road surface at the boundary between the fourth segment and the fifth segment based on the values of reliability of the road surface 533 in one segment (i.e., the fourth segment) and the road surface 531 in another segment (i.e., the fifth segment) adjacent to the one segment.

For example, firstly, the difference between the height of the endpoint 534 of the road surface 533 in the fourth segment and the height of the starting point 532 of the road surface 531 in the fifth segment is calculated and the obtained difference is divided by the ratio of the values of reliability of the road surface 533 in the fourth segment and the values of reliability of the road surface 531 in the fifth segment. Then, the endpoint 534 of the road surface 533 in the fourth segment and the starting point 532 of the road surface 531 in the fifth segment are corrected so as to pass through the height 535 that is based on the value calculated as above.

In such cases, for example, when the ratio of the values of reliability of the road surface 533 in the fourth segment and the values of reliability of the road surface 531 in the fifth segment is 1:3, the height 535 is calculated by multiplying the difference between the endpoint 534 and the starting point 532 by 3/4 and adding the obtained value to the height of the endpoint 534. In this configuration, the inclination of the road surfaces in the fourth and fifth segments are maintained. Alternatively, in this configuration, adjustments may be made without maintaining the inclination of the road surfaces.

According to the embodiments as described above, a road surface in a segment to be corrected is corrected based on a road surface estimated in an adjacent segment, according to the reliability of a road surface estimated in each segment. Due to this configuration, the accuracy of the road surface detection can be improved.

A distance value and a disparity value can be handled in an equivalent manner. For this reason, in the embodiments as described above, a disparity image is used as an example of a distance image. However, no limitation is intended therein. For example, a disparity image that is generated using a stereo camera may be integrated with distance data that is generated using a detector such as a millimeter-wave radar and a laser radar to generate a distance image. Alternatively, a stereo camera and a detector such as a millimeter-wave radar and a laser radar may be used in combination, and the results of the object detection using a stereo camera as described above may be combined with distance data to further improve the detection accuracy.

The system configurations as described above according to the embodiments of the present disclosure are given by way of example, and as a matter of course, other various kinds of system configurations may be adopted depending on the use or purposes. Alternatively, some or all of the embodiments as described above may be combined together.

The functional units including the processing hardware 510, the image analysis unit 600, and the vehicle drive control unit 104, according to the present embodiments as described above, may be implemented by hardware, or may be implemented by executing a program stored in a memory by the CPU. Note that such a program may be recorded in a file in a format installable or executable on a computer-readable recording medium for distribution. Examples of such recording medium include, but not limited to, a compact disc-recordable (CD-R), a digital versatile disc (DVD), and a Blu-ray disc. In addition, a memory storing any one of the above-described control programs, such as a recording medium including a CD-ROM or a HDD, may be provided in the form of a program product to users within a certain country or outside that country.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored on any kind of storage medium. Examples of storage media include, but are not limited to, flexible disks, hard disks, optical discs, magneto-optical discs, magnetic tape, nonvolatile memory cards, ROM, etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD-ROM, magnetic tape device or solid state memory device.

**Claims**

1. An image processing device (600) comprising:

   a generation unit (12) configured to generate, from a distance image having a plurality of distance values according to distance from a road surface on a plurality of captured images captured by a plurality of imaging units (510a, 510b), vertical-direction distribution data indicating frequency distribution of the distance values in a vertical direction of the distance image;
   an estimation unit (13) configured to estimate a road surface in each segment that depends on the distance, based on the vertical-direction distribution data; and
   a correction unit (14) configured to calculate reliability of the road surface estimated by the estimation unit (13) and correct a road surface in a segment to be corrected based on the calculated reliability, with reference to a road surface estimated in an adjacent segment.

2. The image processing device (600) according to claim 1, wherein the correction unit (14) configured to calculate the reliability based on a number of sample points in each segment used by the estimation unit (13) to estimate the road surface in each segment, an inclination of height of the road surface in each segment estimated by the estimation unit (13), or based on a correlation of the sample points in each segment used by the estimation unit (13) to estimate the road surface in each segment.

3. The image processing device (600) according to claim 1 or 2, wherein when the reliability of a road surface in a first segment is equal to or greater than a prescribed value and the reliability of a road surface in a second segment with the distance longer than the first segment is less than the prescribed value, the correction unit (14) corrects a starting point of the road surface in the second segment so as to pass through an endpoint of the road surface in the first segment.

4. The image processing device (600) according to claim 3, wherein when the reliability of a road surface (621) in a third segment is equal to or greater than the prescribed value and the reliability of the road surface in the second segment with the distance shorter than the third segment is less than the prescribed value, the correction unit (14) corrects an endpoint of the road surface in the second segment so as to pass through a starting point (622) of the road surface (621) in the third segment.

5. The image processing device (600) according to any one of claims 1 to 4, wherein the correction unit (14) corrects the road surface in the segment to be corrected using a preset flat road surface, inclination of a road surface detected from a frame of a previously captured one of the captured images, or inclination of a road surface detected from a frame of a just captured one of the captured images.

6. The image processing device (600) according to any one of claims 1 to 5, wherein the correction unit (14) corrects an endpoint (534) of a road surface (533) estimated in a fourth segment and a starting point (532) of a road surface (531) estimated in a fifth segment so as to match based on a ratio of reliability of the road surface (533) estimated in the fourth segment to reliability of the road surface (531) estimated in the fifth segment with the distance longer than the fourth segment.

7. An imaging device (2, 500, 600) comprising:

a plurality of imaging units (510a, 510b);
a distance-image generation unit (11, 511) configured to generate a distance image having a distance value according to a disparity of an object in the plurality of captured images, from a plurality of captured images captured by the plurality of imaging units (510a, 510b); and
the image processing device (600) according to any one of claims 1 to 6.

8. A mobile equipment control system (1) comprising:

a plurality of imaging units (510a, 510b) provided for a mobile object (100) and configured to capture an area ahead of the mobile object (100);
a distance-image generation unit (11, 511) configured to generate a distance image having a distance value according to a disparity of an object in the plurality of captured images, from a plurality of captured images captured by the plurality of imaging units (510a, 510b);
the image processing device (600) according to any one of claims 1 to 6;

an object detector (600, 602) configured to detect the object in the plurality of captured images based on the road surface corrected by the correction unit (14) and the distance image; and
a controller (19, 104) configured to control the mobile object (100) based on data of the object detected by the object detector (600, 602).

9. A method of processing an image, the method comprising:

generating, from a distance image having a plurality of distance values according to distance from a road surface on a plurality of captured images captured by a plurality of imaging units (510a, 510b), vertical-direction distribution data indicating frequency distribution of the distance values in a vertical direction of the distance image;
estimating a road surface in each segment that depends on the distance, based on the vertical-direction distribution data;
calculating reliability of the road surface estimated by the estimating (S201); and
correcting a road surface in a segment to be corrected based on the reliability calculated by the calculating, with reference to a road surface estimated in an adjacent segment (S202).

10. A carrier means carrying computer readable code for controlling a computer system to carry out the method of claim 9.

# FIG. 1

1

100

CAPTURING UNIT

105

500

600

2

IMAGE ANALYSIS UNIT

103

104

DISPLAY MONITOR

VEHICLE DRIVE CONTROL UNIT

# FIG. 2

2

500

511a
513a
514a
510a
515a

511b
513b
514b
510b
515b

BRIGHTNESS
IMAGE DATA

BRIGHTNESS
IMAGE DATA

510

DISPARITY
COMPUTATION UNIT

511

DISPARITY
IMAGE DATA

601

RAM, ROM

600

602

CPU

603

DATA I/F

604

SERIAL I/F

# FIG. 3

1

| DISPARITY IMAGE GENERATOR | → | V-MAP GENERATOR | → | ROAD ESTIMATION UNIT | → | ROAD CORRECTION UNIT |
|---|---|---|---|---|---|---|
| 11 | | 12 | | 13 | | 14 |

| ROAD HEIGHT TABLE CALCULATOR | → | CLUSTERING UNIT | → | REJECTION UNIT | → | TRACKING UNIT | → | CONTROLLER |
|---|---|---|---|---|---|---|---|---|
| 15 | | 16 | | 17 | | 18 | | 19 |

# FIG. 4A

# FIG. 4B

# FIG. 5A

UTILITY POLE 403

y

PRECEDING
VEHICLE 402

ROAD
SURFACE 401

x

# FIG. 5B

y

ROAD
SURFACE 501

UTILITY POLE 503

PRECEDING
VEHICLE 502

DISPARITY d

# FIG. 6A

UTILITY POLE 403

PRECEDING
VEHICLE 402

ROAD
SURFACE 401

y

x

# FIG. 6B

ROAD
SURFACE 501

PRECEDING
VEHICLE 502

y

DISPARITY d

# FIG. 7A

UTILITY POLE 403

y

PRECEDING
VEHICLE 402

405

ROAD
SURFACE 401

REFLECTION 404

x

# FIG. 7B

y

ROAD
SURFACE 501

505

PRECEDING
VEHICLE 502

UTILITY POLE 503

REFLECTION 54

DISPARITY d

# FIG. 8

START

DIVIDE V-MAP INTO MULTIPLE SEGMENTS — S11

EXTRACT SAMPLE POINT FROM PIXELS OF V-MAP — S12

EXCLUDE INAPPROPRIATE POINTS FROM EXTRACTED SAMPLE POINTS — S13

DETECT SHAPE (POSITION AND HEIGHT) OF ROAD SURFACE BASED ON SAMPLE POINTS — S14

END

# FIG. 9

START

DETECT SEGMENT WHERE ROAD SURFACE IS INAPPROPRIATE, BASED ON ESTIMATED RELIABILITY OF ROAD SURFACE IN EACH SEGMENT — S101

CORRECT ROAD SURFACE OF INAPPROPRIATE SEGMENT — S102

END

# FIG. 10A

DISPARITY d

y

LENGTH OF
ROAD SURFACE

LENGTH OF SEGMENT

# FIG. 10B

DISPARITY d

y

521

523

522

n
SEGMENT

n-1
SEGMENT

# FIG. 10C

FIG. 11A

FIG. 11B

# FIG. 12

# FIG. 13

# FIG. 14

```
        START

CALCULATE ESTIMATED RELIABILITY        S201
OF ROAD SURFACE IN EACH SEGMENT

CORRECT ROAD SURFACE IN EACH           S202
SEGMENT BASED ON RELIABILITY OF
ROAD SURFACE IN EACH SEGMENT

         END
```

# FIG. 15A

531
534
533
532
FIXED
POINT
535

# FIG. 15B

531a
535
533a

Europäisches
Patentamt

European
Patent Office

Office européen
des brevets

## EUROPEAN SEARCH REPORT

Application Number

EP 17 16 8600

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU MEIQING ET AL: "Nonparametric Technique Based High-Speed Road Surface Detection", IEEE TRANSACTIONS ON INTELLIGENT TRANSPORTATION SYSTEMS, IEEE, PISCATAWAY, NJ, USA, vol. 16, no. 2, 1 April 2015 (2015-04-01), pages 874-884, XP011576974, ISSN: 1524-9050, DOI: 10.1109/TITS.2014.2345413 [retrieved on 2015-03-27] | 1,5,7-10 | INV. G06T7/593 |
| Y | * sections III.B, III.C, IV.B and IV.D; figures 3,4 * | 2-4,6 | |
| | ----- | | |
| X | CHUNG-HEE LEE: "Stereo vision-based vehicle detection using a road feature and disparity histogram", OPTICAL ENGINEERING, vol. 50, no. 2, 1 February 2011 (2011-02-01), page 027004, XP055049147, ISSN: 0091-3286, DOI: 10.1117/1.3535590 | 1,5,7-10 | |
| Y | * section 3.1; figure 4 * | 2-4,6 | TECHNICAL FIELDS SEARCHED (IPC) G06T |
| | ----- | | |
| X | US 2016/014406 A1 (TAKAHASHI SADAO [JP] ET AL) 14 January 2016 (2016-01-14) * paragraphs [196ff], [0232] - [0286]; figures 4,24,33A,33B,37,40 * | 1-10 | |
| | ----- | | |
| | -/-- | | |

The present search report has been drawn up for all claims

| Place of search | Date of completion of the search | Examiner |
|---|---|---|
| Munich | 25 July 2017 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 16 8600

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JUN ZHAO ET AL: "Detection of non-flat ground surfaces using V-Disparity images", INTELLIGENT ROBOTS AND SYSTEMS, 2009. IROS 2009. IEEE/RSJ INTERNATIONAL CONFERENCE ON, IEEE, PISCATAWAY, NJ, USA, 10 October 2009 (2009-10-10), pages 4584-4589, XP031580567, ISBN: 978-1-4244-3803-7 * section IV; figures 6,8 * | 2 | |

-----

TECHNICAL FIELDS
SEARCHED       (IPC)

The present search report has been drawn up for all claims

| Place of search | Date of completion of the search | Examiner |
|---|---|---|
| Munich | 25 July 2017 | Krawczyk, Grzegorz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 17 16 8600

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2017

| Patent document cited in search report | Publication date | Patent family member(s) | Publication date |
|---|---|---|---|
| US 2016014406 A1 | 14-01-2016 | JP 2016029557 A<br>US 2016014406 A1 | 03-03-2016<br>14-01-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015075800 A